# EUROPEAN PATENT SPECIFICATION

(11) **EP 2 756 434 B1**
(45) Date of publication and mention of the grant of the patent: **26.10.2016**
(21) Application number: 12830927.5
(22) Date of filing: 10.09.2012
(51) Int. Cl.: G06F 17/40, G06F 17/30, G06F 12/16, G06F 11/14

(54) **EFFICIENT DATA RECOVERY**
EFFIZIENTE DATENWIEDERHERSTELLUNG
RÉCUPÉRATION EFFICACE DE DONNÉES

(30) Priority: 12.09.2011 US 201113230794
(43) Date of publication of application: 23.07.2014
(73) Proprietor: Microsoft Technology Licensing, LLC, Redmond, WA 98052 (US)
(72) Inventor: SINGLA, Amit, Redmond, Washington 98052-6399 (US); JEYAPRAKASH, Arasu, Shankher, Redmond, Washington 98052-6399 (US); AGRAWALA, Bikash, Kumar, Redmond, Washington 98052-6399 (US); SARKAR, Deepanjyoti, Redmond, Washington 98052-6399 (US); KHANZODE, Pankaj, Vasant, Redmond, Washington 98052-6399 (US); SRIVASTAVA, Abhinav, Redmond, Washington 98052-6399 (US); PRABHU, Vanita, Redmond, Washington 98052-6399 (US)
(74) Representative: Grünecker Patent- und Rechtsanwälte PartG mbB
(86) International application number: PCT/US2012/054345
(87) International publication number: WO 2013/039794

(56) References cited:
- US-A1- 2007 208 780
- US-A1- 2008 077 632
- US-A1- 2010 049 750
- US-A1- 2010 114 833
- US-A1- 2011 106 768
- US-A1- 2011 145 199
- US-B1- 6 865 655
- US-B1- 7 672 934
- US-B1- 7 672 934
- US-B2- 7 761 880

## Description

### BACKGROUND

Computers have become highly integrated in the workforce, in the home, in mobile devices, and many other places. Computers can process massive amounts of information quickly and efficiently. Software applications designed to run on computer systems allow users to perform a wide variety of functions including business applications, schoolwork, entertainment and more. Software applications are often designed to perform specific tasks, such as word processor applications for drafting documents, or email programs for sending, receiving and organizing email.

As such, software applications and their corresponding user-generated data are often very valuable to users and businesses. In many cases, this application data is backed up on other (remote) computer systems. Data backups typically store copies of each data file. As changes are made to these files over time, the backups overwrite the previously-stored backup data to ensure that the backed-up data is up-to-date. These data backups can become increasingly larger as time goes on and more and more users create and edit data. Processing and transferring these large amounts of data can become burdensome.
As an example, US 2010/011-4833 A1 discloses methods and systems for performing recovery operations by using checksums for data blocks identified in a computer system requiring recovery. The checksums of the data blocks potentially requiring restoration are compared, at the computer system requiring restoration, to the checksums of data blocks stored in a backup server. In case of the computer system requiring restoration identifies data blocks in the backup server it is not in possession of all that are damaged, it requires the backup server to forward the respective data blocks in order to restore them at the computer system.
Moreover, US 6865655 B1 discloses methods and systems that allow for providing the backup server storing backups of data items with the necessary information and to keep the data items stored in the backup server up-to-date.

The document US2011/145199A discloses a system and method for managing backup and restore operations associated with a backup system, wherein metadata associated with files/directories of one or more file systems associated with one or more resources is received, on which basis a virtual catalog image associated with the metadata is created in a virtual file system image format for use in search and browse operations.

The document US2007/0208780A discloses a system and method for maintaining metadata for offline repositories in online databases for efficient access, wherein a metadata module is configured to maintain metadata pertaining to one or more data record copies of a data record.

### BRIEF SUMMARY

Embodiments described herein are directed to locating and restoring backed up items using a custom schema and to efficiently transferring recovery data. In one embodiment, a computer system defines a schema that provides data search and retrieval among backup data sets. The schema stores searchable attributes for each database item and leverages a file system to store file system metadata for the data items of the backup sets. The computer system receives a request to find data items among the backup data sets and accesses the schema to determine, from the stored searchable attributes, which recovery points among the backup data sets include the requested data items. The computer system also restores the requested data items from the determined recovery point within the backup data sets.

In another embodiment, a computer system receives from a user an indication of various backup data items which are to be recovered from a specified recovery point in a set of data backups. The computer system computes checksum data corresponding to each of the user-specified backup data items and compares the computed checksum data of the user-specified backup data files to checksum data associated with data items already on the user's computer system to determine which segments of the backup data items are to be restored to the user. The computer system also receives from the data backups those backed up data items for which a checksum did not already exist on the user's computer system, and combines the received backup data items with the user's existing data items to fully recover the user's data.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Additional features and advantages will be set forth in the description which follows, and in part will be obvious from the description, or may be learned by the practice of the teachings herein. Features and advantages of the invention, which is defined in detail in the appended independent claims 1, 10 and 13, may be realized and obtained by means of the instruments and combinations particularly pointed out in the appended claims. Features of the present invention will become more fully apparent from the following description and appended claims, or may be learned by the practice of the invention as set forth hereinafter.

### BRIEF DESCRIPTION OF THE DRAWINGS

To further clarify the above and other advantages and features of embodiments of the present invention, a more particular description of embodiments of the present invention will be rendered by reference to the appended drawings. It is appreciated that these drawings depict only typical embodiments of the invention and are therefore not to be considered limiting of its scope. The invention will be described and explained with additional specificity and detail through the use of the accompanying drawings in which:
Figure 1 illustrates a computer architecture in which embodiments of the present invention may operate including locating and restoring backed up items using a custom schema.
Figure 2 illustrates a flowchart of an example method for locating and restoring backed up items using a custom schema.
Figure 3 illustrates a flowchart of an example method for efficiently transferring recovery data.
Figure 4 illustrates an alternative computer architecture embodiment in recovery data is efficiently transferred from a backup location to a recovery target.

### DETAILED DESCRIPTION

Embodiments described herein are directed to locating and restoring backed up items using a custom schema and to efficiently transferring recovery data. In one embodiment, a computer system defines a schema that provides data search and retrieval among backup data sets. The schema stores searchable attributes for each database item and leverages a file system to store file system metadata for the data items of the backup sets. The computer system receives a request to find data items among the backup data sets and accesses the schema to determine, from the stored searchable attributes, which recovery points among the backup data sets include the requested data items. The computer system also restores the requested data items from the determined recovery point within the backup data sets.

In another embodiment, a computer system receives from a user an indication of various backup data items which are to be recovered from a specified recovery point in a set of data backups. The computer system computes checksum data corresponding to each of the user-specified backup data items and compares the computed checksum data of the user-specified backup data files to checksum data associated with data items already on the user's computer system to determine which segments of the backup data items are to be restored to the user. The computer system also receives from the data backups those backed up data items for which a checksum did not already exist on the user's computer system, and combines the received backup data items with the user's existing data items to fully recover the user's data.

The following discussion now refers to a number of methods and method acts that may be performed. It should be noted, that although the method acts may be discussed in a certain order or illustrated in a flow chart as occurring in a particular order, no particular ordering is necessarily required unless specifically stated, or required because an act is dependent on another act being completed prior to the act being performed.

Embodiments of the present invention may comprise or utilize a special purpose or general-purpose computer including computer hardware, such as, for example, one or more processors and system memory, as discussed in greater detail below. Embodiments within the scope of the present invention also include physical and other computer-readable media for carrying or storing computer-executable instructions and/or data structures. Such computer-readable media can be any available media that can be accessed by a general purpose or special purpose computer system. Computer-readable media that store computer-executable instructions in the form of data are computer storage media. Computer-readable media that carry computer-executable instructions are transmission media. Thus, by way of example, and not limitation, embodiments of the invention can comprise at least two distinctly different kinds of computer-readable media: computer storage media and transmission media.

Computer storage media includes RAM, ROM, EEPROM, CD-ROM, solid state drives (SSDs) that are based on RAM, Flash memory, phase-change memory (PCM), or other types of memory, or other optical disk storage, magnetic disk storage or other magnetic storage devices, or any other medium which can be used to store desired program code means in the form of computer-executable instructions, data or data structures and which can be accessed by a general purpose or special purpose computer.

A "network" is defined as one or more data links and/or data switches that enable the transport of electronic data between computer systems and/or modules and/or other electronic devices. When information is transferred or provided over a network (either hardwired, wireless, or a combination of hardwired or wireless) to a computer, the computer properly views the connection as a transmission medium. Transmissions media can include a network which can be used to carry data or desired program code means in the form of computer-executable instructions or in the form of data structures and which can be accessed by a general purpose or special purpose computer. Combinations of the above should also be included within the scope of computer-readable media.

Further, upon reaching various computer system components, program code means in the form of computer-executable instructions or data structures can be transferred automatically from transmission media to computer storage media (or vice versa). For example, computer-executable instructions or data structures received over a network or data link can be buffered in RAM within a network interface module (e.g., a network interface card or "NIC"), and then eventually transferred to computer system RAM and/or to less volatile computer storage media at a computer system. Thus, it should be understood that computer storage media can be included in computer system components that also (or even primarily) utilize transmission media.

Computer-executable (or computer-interpretable) instructions comprise, for example, instructions which cause a general purpose computer, special purpose computer, or special purpose processing device to perform a certain function or group of functions. The computer executable instructions may be, for example, binaries, intermediate format instructions such as assembly language, or even source code. Although the subject matter has been described in language specific to structural features and/or methodological acts, it is to be understood that the subject matter defined in the appended claims is not necessarily limited to the described features or acts described above. Rather, the described features and acts are disclosed as example forms of implementing the claims.

Those skilled in the art will appreciate that the invention may be practiced in network computing environments with many types of computer system configurations, including personal computers, desktop computers, laptop computers, message processors, hand-held devices, multi-processor systems, microprocessor-based or programmable consumer electronics, network PCs, minicomputers, mainframe computers, mobile telephones, PDAs, pagers, routers, switches, and the like. The invention may also be practiced in distributed system environments where local and remote computer systems that are linked (either by hardwired data links, wireless data links, or by a combination of hardwired and wireless data links) through a network, each perform tasks (e.g., cloud computing, cloud services and the like). In a distributed system environment, program modules may be located in both local and remote memory storage devices.

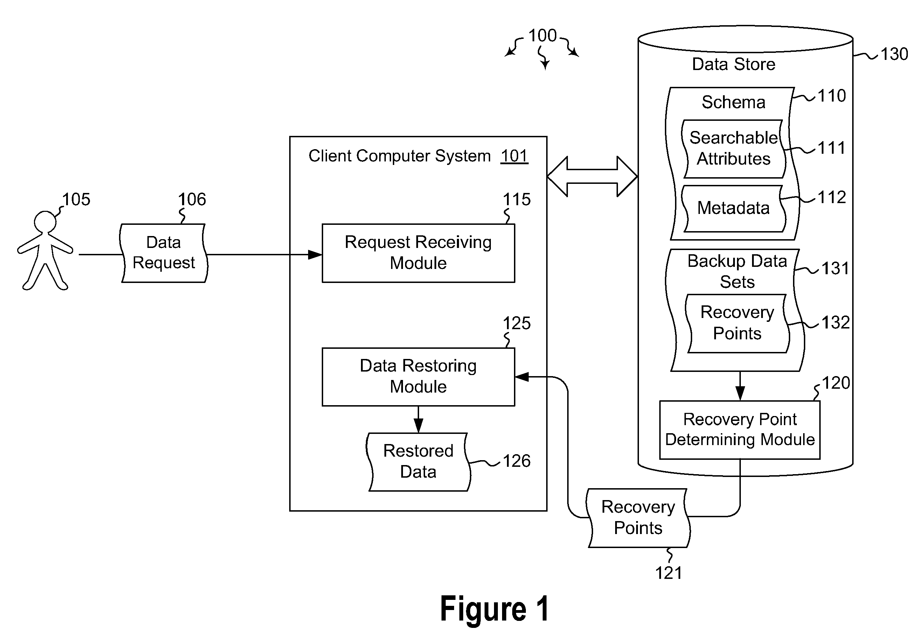

Figure 1 illustrates a computer architecture 100 in which the principles of the present invention may be employed. Computer architecture 100 includes client computer system 101 as well as data store 130. These computer systems may be local or distributed computer systems and may include or use cloud computing systems. The computer systems may be configured to communicate with other computer systems and/or other devices. The computer systems may include various modules for performing specific tasks. These modules will be discussed in connection with various methods and systems below.

As indicated above, computer system users may create backups of their data. The backups typically include an operating system, one or more applications and various user-generated files and settings. Some embodiments described herein include a highly optimized catalog scheme to enable efficient search for items across backup sets and extraction of data items' metadata from specific backup sets. Embodiments also describe an efficient algorithm that uses existing data on or close to the recovery target (the computer system to which data is to be restored) to minimize the data transfer from backup storage (e.g., backup data sets 131 in data store 130).

The item level catalog may be split into 2 parts: one that stores the searchable attributes of the items (like name, last modified time, size, author etc) in a set of database tables, and another that stores file system metadata for the physical files that are part of the backup set. The first part provides efficient browse and search features for the recovery items. The second part helps with efficient storage during backup and extraction of metadata for physical files at the time of recovery. Both of these parts are described in more detail below.

In some cases, items stored in an item attribute catalog are hierarchical in nature. That is, the items have parent-child relationships. The items that represent a parent (e.g., directory, subdirectory, etc.) may be stored in a ParentItem table while the children are stored in a ChildItem table. Since each parent item can have multiple children, the information about the parent is not repeated and is stored only once.

In some embodiments, a particular item may appear in multiple versions. For example, a file "document.txt" under the c:\files directory would get backed up as part of a dated backup (e.g., Backup B1, B2, etc.). The file may continue to stay until backup B100. Then, when a user tries to browse files under c:\files for backup B50 to do recovery, the file document.txt appears in the list. In order to achieve this behavior, each item in the ParentItem and ChildItem table has a StartTime and EndTime. The StartTime indicates the first time when the item appeared and the EndTime indicates the time when the item became invalid (e.g., was deleted). This ensures that the entry for each item is not repeated in each version and, hence, the space used to store the information inside the table is minimal. This schema also helps in keeping the table as thin possible, which in turn helps in better query performance. The schema can efficiently expose a browse view where the cumulative list of all items in a time range can be seen thus avoiding the need for the user to go to each backup set and browse separately.

In some cases, extended information about child items may be stored in an additional table. The additional table uses a schema that is specific to the type of attributes stored and queried for. As such, the extended information allows for search and recovery functions that implement the extended information. For instance, software collaboration programs may list document-level properties and other list-level details in a specialized recovery search UI. Additionally or alternatively, for data files, the extended information may include modified time, changed time, file size and any other file system attributes. These may also be presented in a search or recovery user interface. Moreover, child item information may be extended to add specific child item properties based on the context of the child item's data source.

The path information that is stored in the ParentItem table can be as big as 32K characters or even longer in some embodiments. This information is split into two parts with the first part containing the first (e.g., 400) characters of the file path and the remaining goes into the second part. In most cases, the length of the item path is less than 400 characters. This mechanism helps in including the first part as part of the index which helps in faster query response. For the remainder of cases where the path is greater than 400 characters long, there also by having the first 400 characters part of the index, the query is narrowed down only to those very few rows with the first 400 characters matching the query.

The file metadata catalog may be maintained as a dataless virtual hard disk (VHD). A dataless VHD is one where files are created with all the metadata and attributes but no data streams are written for any file. Using a dataless VHD allows the file system itself to be used as the catalog format for file metadata. During recovery, this dataless VHD can be mounted and use file system's restore APIs to extract the metadata for the files to be recovered. This is more efficient than other formats for file metadata which convert the file system metadata to another (custom) format. These custom formats need to be changed each time a new feature is introduced in the file system. Using a dataless VHD allows the system to use the same file system version on the dataless VHD as the source and avoid dealing with any compatibility issues with custom formats.

To optimize data transfer during recover, an algorithm may be provided which is designed to function whether the source data is wholly or partially available. The algorithm may be applied in various different scenarios including the following: 1) a user needs to obtain an older version of the source data, 2) a user needs to revert to a state before data corruption, 3) a user needs to resume recovery after a failure or cancellation, and 4) a user needs to recover the backed up data to a recovery target over a low bandwidth and/or high latency connection.

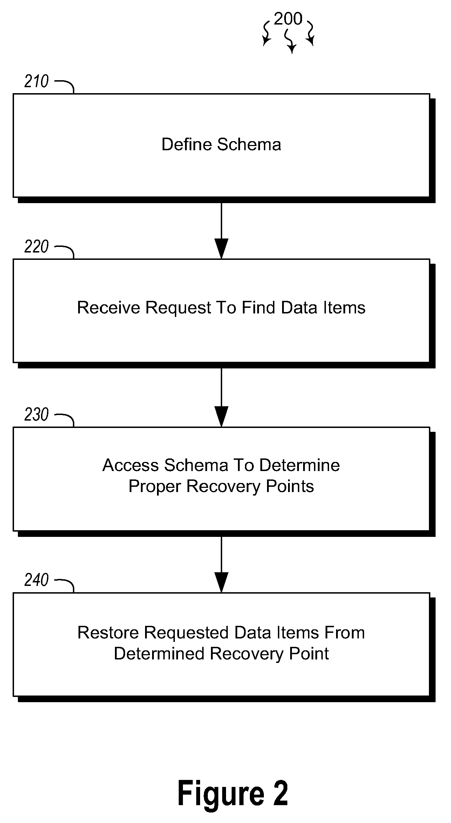

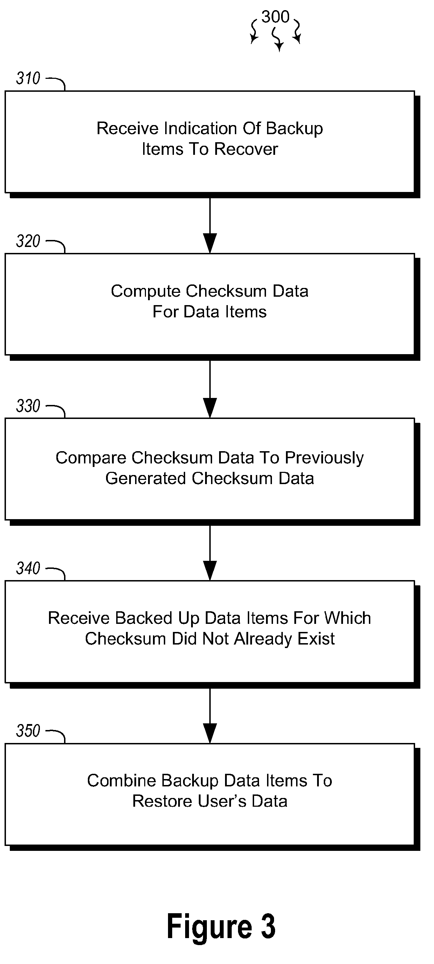

Rather than downloading all of the user's files in full, the data transfer is optimized by recovering only those parts of the source data that mismatch with the backup data. Checksum values are computed for the data in the backup set as well as for the data already available on the recovery target. Recovery is optimized by downloading only the data which doesn't have a data block with same checksum already available on recovery target. This algorithm may also be applied for recovering the data to alternate locations as well. The recovery program can intelligently copy the matching data blocks from the original location (if the checksum matches) and use the backup data only for the blocks that don't have any block with matching checksum in original location. These concepts will be explained in greater detail below with reference to methods 200 and 300 of Figures 2 and 3, respectively.

In view of the systems and architectures described above, methodologies that may be implemented in accordance with the disclosed subject matter will be better appreciated with reference to the flow charts of Figures 2 and 3. For purposes of simplicity of explanation, the methodologies are shown and described as a series of blocks. However, it should be understood and appreciated that the claimed subject matter is not limited by the order of the blocks, as some blocks may occur in different orders and/or concurrently with other blocks from what is depicted and described herein. Moreover, not all illustrated blocks may be required to implement the methodologies described hereinafter.

Figure 2 illustrates a flowchart of a method 200 for locating and restoring backed up items using a custom schema. The method 200 will now be described with frequent reference to the components and data of environment 100 of Figure 1.

Method 200 includes an act of defining a schema configured to provide data search and retrieval among backup data sets, wherein the schema stores searchable attributes for each database item and leverages a file system to store file system metadata for the data items of the backup sets (act 210). For example, custom schema 110 may be defined by a user 105 or set of users. The schema may be designed to provide data search and retrieval for backup data sets 131. The schema itself includes various searchable attributes 111 for each database item (e.g., a file or set of files). The schema can use a local file system on computer system 101 to store file system metadata 112 for the data items of the different backup sets.

The searchable attributes may include indication of the time the data portion was first stored (i.e., the first recovery point) in the backup set. The searchable attributes may further include the time the data portion was last accessed (or when the data item was deleted) (i.e., the last recovery point). A user interface may be used which accesses the schema to display a span of backup sets any given data item is part of. Thus, a user may specify in the user interface a data item, and the user interface may display a list or span of backup data sets of which the item is a part.

The file system metadata 112 may include parent information and file name information. The parent information may include drive and path information, including directories and subdirectories. In some embodiments, the parent information may be split into different files for data paths greater than 400 characters. The path that is thus split into two parts, the first of the two parts being limited in length to a predefined data length. This length may be 400 characters, or substantially any other number of characters. The parent information is only stored once for all files stored under the parent. Avoiding data path redundancies increases efficiency. The parent information and file name information may be stored in separate tables.

In some cases, the file system metadata 112 is stored in a dataless virtual hard drive. As explained above, the dataless virtual hard drive is configured to store data files created with their corresponding metadata and attributes, but without storing the actual data file's data. During data recovery, the dataless virtual hard drive is mounted and file system application programming interfaces (APIs) may be implemented to extract the metadata for the data items that are to be recovered (from backup data sets 131).

Returning to Figure 2, method 200 includes an act of receiving a request to find one or more data items among at least one of the backup data sets (act 220). For example, request receiving module 115 may receive data request 106 from user 105 requesting that certain specified data items are to be found among the backed up data sets 131. The schema 110 may be accessed by the recovery point determining module so it can determine, from the stored searchable attributes 111, which recovery points 132 among the backup data sets include the requested data items (act 230). For example, if a file was included in backups B25-B50, and backup B50 included the latest version of the file, the recovery point determining module would send recover points B25-B50 to the data restoring module 125, which would then restore the requested data items 126 from the determined recovery point(s) within the backup data sets (act 240). As such, the schema 110 allows a minimal amount of data to be stored, and allows specific backed up items to be searched and recovered in an efficient manner.

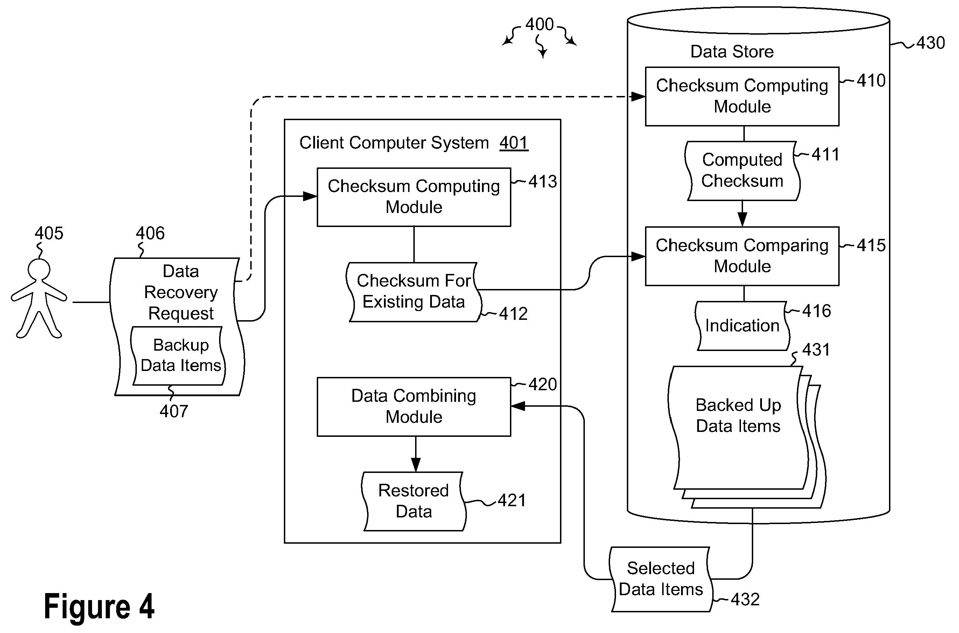

Figure 3 illustrates a flowchart of a method 300 for efficiently transferring recovery data. The method 300 will now be described with frequent reference to the components and data of environment 400 of Figure 4.

Method 300 includes an act of receiving from a user an indication of one or more backup data items which are to be recovered from a specified recovery point in a set of data backups (act 310). For example, client computer system 401 may receive data recovery request 406 from user 405. The data recovery request may specify various backup data items 407 that are to be recovered from a specified recovery point within the backed up data items 431. The backed up data items may be stored in data store 430, which is accessible by (or is directly attached to) the client computer system.

Method 300 also includes an act of computing checksum data corresponding to each of the user-specified backup data items (act 320). For example, checksum computing module 410 may compute a checksum 411 that corresponds to each user-specified backup data item 407. The computed checksums may be versioned, such that different checksums correspond to different versions of data items. The backup data may also be versioned, such that multiple different versions of a data item may be backed up. Each of these different backed up data items would have its own unique (versioned) checksum. When these versioned checksums are used, the backup data may be restored from a specified backup data version. In this manner, all files related to a given version may be restored together.

Method 300 includes an act of comparing the computed checksum data of the user-specified backup data files to checksum data associated with data items already on the user's computer system to determine which segments of the backup data items are to be restored to the user (act 330). For example, checksum comparing module 415 may compare the computed checksum 411 to one or more existing checksums 412. The existing checksums may correspond to data files that are already on the user's computer. The comparison may be used to determine which data items are already on the user's computer. Then, once it has been determined which data files are not already on the user's computer, those backed up data items for which a checksum did not already exist on the user's computer system (e.g., selected data items 432) may be restored from the backed up data items 431 (act 340). Thus, only data which does not have a data block with the same checksum is downloaded to the user's computer system.

Method 300 further includes an act of combining the received backup data items with the user's existing data items such that the user's data is fully recovered (act 350). Once the selected data items 432 have been received, data combining module 420 may combine the existing data with the received data to create the user's fully restored data 421. In some cases, the restored data items include data files for an entire data volume. During the data recovery, if the recovery is canceled or otherwise stopped due to a system failure, it may be resumed from the point of failure or cancellation. Moreover, the backup data may be restored to other locations than the original location on the user's computer system. For example, the backup data may be restored to other (perhaps remote) computer systems that are different than the computer system from which the data was originally backed up.

Accordingly, methods, systems and computer program products are provided which locate and restore backed up items using a custom-generated schema. Moreover, methods, systems and computer program products are provided which efficiently transfer recovery data by transferring only data that is not already on the user's computer system.

The described embodiments are to be considered in all respects only as illustrative and not restrictive. The scope of the invention is, therefore, indicated by the appended claims rather than by the foregoing description.

## Claims

1. A computer-implemented method for locating and restoring backed up items using a custom schema to be performed at a computer system including at least one processor and a memory, in a computer networking environment including a plurality of computing systems, the method comprising:
an act (210) of defining a schema configured to provide data search and retrieval among backup data sets, wherein the schema stores searchable attributes for each database item and leverages a file system to store file system metadata for the data items of the backup data sets;
an act (220) of receiving, at a client computer system, a request to find one or more data items among at least one of the backup data sets (131) stored in a data store (130);
an act (230) of accessing the schema to determine, from the stored searchable attributes, which recovery points among the backup data sets include the requested data items; and
an act (240) of restoring the requested data items from the determined recovery point within the backup data sets;
wherein the file system metadata is stored in a dataless virtual hard drive, the dataless virtual hard drive being configured to store data files created with their corresponding metadata and attributes, but without storing the actual data file's data; and
wherein during data recovery, the dataless virtual hard drive is mounted and file system application programming interfaces are implemented to extract the metadata for the data items that are to be recovered;
the method further comprising:
an act (320) of computing, at the client computer system, checksum data corresponding to each of the user-specified backup data items;
an act (330) of comparing, at a checksum comparing module of the data store, the computed checksum data of the user-specified backup data files to checksum data associated with data items already on the user's computer system to determine which segments of the backup data items are to be restored to the user's computer system;
an act (340) of receiving, at the user's computer system, from at least one of the data backups those backed up data items for which a checksum did not already exist on the user's computer system; and
an act (350) of combining the received backup data items with the user's existing data items such that the user's data is fully recovered.

2. The method of claim 1, wherein the searchable attributes comprise at least an indication of the time the data portion was first stored in the backup set and the time the data portion was last accessed.

3. The method of claim 2, wherein a user interface using the schema displays a span of backup sets the data portion is part of.

4. The method of claim 2, wherein the user interface shows, for each data item, the first recovery point and last recovery point.

5. The method of claim 1, wherein file system metadata includes parent information and file name information.

6. The method of claim 5, wherein the parent information and file name information are stored in separate tables.

7. The method of claim 5, wherein the parent information includes a path that is split into two parts, the first of the two parts being limited in length to a predefined data length.

8. The method of claim 5, wherein one or more portions of extended information about child items are stored in an additional table, the additional table using a schema that is specific to the type of attributes stored and queried for, the extended information allowing for search and recovery functions that implement the extended information.

9. The method of claim 5, wherein child item information is extended to add one or more specific child item properties based on the context of the child item's data source.

10. A computer program product for implementing a method for efficiently transferring recovery data, the computer program product comprising one or more computer-readable storage media having stored thereon computer-executable instructions that, when executed by one or more processors of the computing system, cause the computing system to perform the method, the method comprising:
an act (310) of receiving, at a client computer system, from a user an indication of one or more backup data items which are to be recovered from a specified recovery point in a set of data backups stored at a data store (130);
an act (210) of defining a schema configured to provide data search and retrieval among backup data sets (131);
wherein the schema stores searchable attributes for each database item and leverages a file system to store file system metadata for the data items of the backup sets;
an act (220) of receiving, at a client computer system, a request to find one or more data items among at least one of the backup data sets stored in a data store;
an act (230) of accessing the schema to determine, from the stored searchable attributes, which recovery points among the backup data sets include the requested data items; and
an act (240) of restoring the requested data items from the determined recovery point within the backup data sets;
wherein the file system metadata is stored in a dataless virtual hard drive, the dataless virtual hard drive being configured to store data files created with their corresponding metadata and attributes, but without storing the actual data file's data; and
wherein during data recovery, the dataless virtual hard drive is mounted and file system application programming interfaces are implemented to extract the metadata for the data items that are to be recovered;
an act (320) of computing, at the client computer system, checksum data corresponding to each of the user-specified backup data items;
an act (330) of comparing, at a checksum comparing module of the data storage, the computed checksum data of the user-specified backup data files to checksum data associated with data items already on the user's computer system to determine which segments of the backup data items are to be restored to the user's computer system;
an act (340) of receiving, at the user's computer system, from at least one of the data backups those backed up data items for which a checksum did not already exist on the user's computer system; and
an act (350) of combining the received backup data items with the user's existing data items such that the user's data is fully recovered.

11. The computer program product of claim 10, wherein the backup data and checksums are versioned.

12. The computer program product of claim 11, wherein backup data is restored from a specified backup data version.

13. A computer system comprising the following:
one or more processors;
system memory;
one or more computer-readable storage media having stored thereon computer-executable instructions that, when executed by the one or more processors, causes the computing system to perform a method for locating and restoring backed up items using a custom schema, the method comprising the following:
an act (210) of defining a schema configured to provide data search and retrieval among backup data sets (131), wherein the schema stores searchable attributes for each database item and leverages a file system to store file system metadata for the data items of the backup data sets, and wherein the file system metadata is stored in a dataless virtual hard drive, the dataless virtual hard drive being configured to store data files created with their corresponding metadata and attributes, but without storing the actual data file's data;
an act (220) of receiving, at a client computer system, a request to find one or more data items among at least one of the backup data sets stored in a data store;
an act (230) of accessing the schema to determine, from the stored searchable attributes, which recovery points among the backup data sets include the requested data items; and
an act (240) of restoring the requested data items from the determined recovery point within the backup data sets, wherein during data recovery, the dataless virtual hard drive is mounted and file system application programming interfaces are implemented to extract the metadata for the data items that are to be recovered;
the method further comprising:
an act (320) of computing, at the client computer system, checksum data corresponding to each of the user-specified backup data items;
an act (330) of comparing, at a checksum comparing module at the data store, the computed checksum data of the user-specified backup data files to checksum data associated with data items already on the user's computer system to determine which segments of the backup data items are to be restored to the user's computer system;
an act (340) of receiving, at the user's computer system, from at least one of the data backups those backed up data items for which a checksum did not already exist on the user's computer system; and
an act (350) of combining the received backup data items with the user's existing data items such that the user's data is fully recovered.

## Patentansprüche

1. Ein computer-implementiertes Verfahren zum Lokalisieren und Wiederherstellen von gesicherten Objekten unter Verwendung eines speziellen Schemas, das in einem Computersystem umfassend wenigstens einen Prozessor und einen Speicher ausgeführt wird, in einer Computernetzwerkumgebung umfassend eine Vielzahl von Computersystemen, das Verfahren umfassend:
Einen Vorgang (210) von Definieren eines Schemas konfiguriert zum Bereitstellen von Datensuche und Wiederherstellung unter Backup-Datensätzen, wobei das Schema durchsuchbare Attribute für jedes Datenbankobjekt speichert und ein Dateisystem dazu veranlasst, Dateisystem-Metadaten für die Datenobjekte der Backup-Datensätze (131) zu speichern;
Einen Vorgang (220) von Empfangen, an einem Client-Computersystem, einer Abfrage zum Finden eines oder mehrerer Datenobjekte unter wenigstens einem der Backup-Datensätze (131), die in einem Datenspeicher (130) gespeichert sind;
Einen Vorgang (230) von Zugreifen auf das Schema um zu ermitteln, von den gespeicherten, durchsuchbaren Attributen, welche Wiederherstellungspunkte unter den Backup-Datensätzen die abgefragten Datenobjekte enthalten; und
Einen Vorgang (240) von Wiederherstellen der abgefragten Datenobjekte von dem ermittelten Wiederherstellungspunkt innerhalb der Backup-Datensätze;
Wobei die Dateisystem-Metadaten auf einer datenlosen virtuellen Festplatte gespeichert sind, wobei die datenlose virtuelle Festplatte ausgebildet ist, Dateien, die mit ihren korrespondierenden Metadaten und Attributen erstellt wurden, zu speichern, aber ohne die eigentlichen Daten der Dateien zu speichern; und
Wobei während einer Datenwiederherstellung die datenlose virtuelle Festplatte gemounted und Dateisystemanwendungsprogramminterfaces implementiert sind, um die Metadaten für die Datenobjekte, die wiederhergestellt werden sollen, zu extrahieren;
Das Verfahren weiterhin umfassend:
Einen Vorgang (320) von Berechnen, auf dem Client-Computersystem, von Checksummendaten, die zu jedem der nutzerspezifizierten Backup-Datenobjekte korrespondieren;
Einen Vorgang (330) von Vergleichen, in einem Checksummenvergleichsmodul des Datenspeichers, die berechneten Checksummendaten der nutzerspezifizierten Backup-Datenobjekte mit Checksummendaten, die mit bereits auf dem Computersystem des Nutzers befindlichen Datenobjekten assoziiert sind, um zu bestimmen, welche Segmente der Backup-Datenobjekte auf dem Computersystem des Nutzers wiederhergestellt werden sollen;
Einen Vorgang (340) von Empfangen, auf dem Computersystem des Nutzers, von wenigstens einem der Datenbackups jene gesicherten Datenobjekte für welche die Checksumme nicht bereits auf den Computersystem des Nutzers existiert; und
Einen Vorgang (350) von Kombinieren der empfangenen Backup-Datenobjekte mit den existierenden Datenobjekten des Nutzers, sodass die Daten des Nutzers vollständig wiederhergestellt sind.

2. Das Verfahren nach Anspruch 1, wobei die durchsuchbaren Attribute wenigstens eine Angabe der Zeit, zu der der Datenteil zuerst in dem Backup-Satz gespeichert wurde und der Zeit, zu der zuletzt auf den Datenteil zugegriffen wurde.

3. Verfahren nach Anspruch 2, wobei ein Nutzerinterface unter Verwendung des Schemas eine Spanne von Backup-Sätzen anzeigt, von denen der Datenteil ein Teil ist.

4. Verfahren nach Anspruch 2, wobei das Nutzerinterface für jedes Datenobjekt den ersten Wiederherstellungspunkt und den letzten Wiederherstellungspunkt zeigt.

5. Das Verfahren nach Anspruch 1, wobei die Dateisystem-Metadaten Vorgängerinformation (parent information) und Dateinameninformation enthalten.

6. Das Verfahren nach Anspruch 5, wobei die Vorgängerinformation und die Dateinameninformation in separaten Tabellen gespeichert sind.

7. Das Verfahren nach Anspruch 5, wobei die Vorgängerinformation einen Pfad umfasst, der in zwei Teile aufgespalten ist, wovon der erste der zwei Teile in der Länge auf eine vordefinierte Datenlänge beschränkt ist.

8. Das Verfahren nach Anspruch 5, wobei ein oder mehrere Teile von erweiterter Information über Nachfolgerobjekte (child items) in einer zusätzlichen Tabelle gespeichert sind, wobei die zusätzliche Tabelle ein Schema nutzt, das spezifisch für den Typ von gespeicherten und abgefragten Attributen ist, wobei die erweiterte Information Suche und Wiederherstellungsfunktionen, die die erweiterte Information implementieren, erlaubt.

9. Das Verfahren nach Anspruch 5, wobei die Nachfolgerobjektinformation erweitert ist, um eine oder mehrere spezifische Nachfolgerobjekteigentschaften basierend auf dem Kontext der Datenquelle des Nachfolgerobjekts hinzuzufügen.

10. Ein Computerprogrammprodukt zum Implementieren eines Verfahrens zum effizienten Transferieren von Wiederherstellungsdaten, wobei das Computerprogrammprodukt eine oder mehrere computerlesbare Speichermedien umfasst, die auf ihnen gespeicherte, von einem Computer ausführbare Instruktionen umfassen, die, wenn von einem oder mehreren Prozessoren des Computersystem ausgeführt, das Computersystem dazu veranlassen, das Verfahren auszuführen, wobei das Verfahren umfasst:
Einen Vorgang (310) von Empfangen, an einem Client-Computersystem, eine Angabe eines Nutzers on von einem oder mehreren Backup-Datenobjekten, die von einem bestimmten Wiederherstellungspunkt in einem Satz von Daten-Backups, die in einem Datenspeicher (130) gespeichert sind, wiederhergestellt werden sollen;
Einen Vorgang (210) von Definieren eines Schemas konfiguriert zum Bereitstellen von Datensuche und Wiederherstellung unter Backup-Datensätzen (131), wobei das Schema durchsuchbare Attribute für jedes Datenbankobjekt speichert und ein Dateisystem dazu veranlasst, Dateisystem-Metadaten für die Datenobjekte der Backup-Datensätze (131) zu speichern;
Einen Vorgang (220) von Empfangen, an einem Client-Computersystem, einer Abfrage zum Finden eines oder mehrerer Datenobjekte unter wenigstens einem der Backup-Datensätze (131), die in einem Datenspeicher (130) gespeichert sind;
Einen Vorgang (230) von Zugreifen auf das Schema um zu ermitteln, von den gespeicherten, durchsuchbaren Attributen, welche Wiederherstellungspunkte unter den Backup-Datensätzen die abgefragten Datenobjekte enthalten; und
Einen Vorgang (240) von Wiederherstellen der abgefragten Datenobjekte von dem ermittelten Wiederherstellungspunkt innerhalb der Backup-Datensätze;
Wobei die Dateisystem-Metadaten auf einer datenlosen virtuellen Festplatte gespeichert sind, wobei die datenlose virtuelle Festplatte ausgebildet ist, Dateien, die mit ihren korrespondierenden Metadaten und Attributen erstellt wurden, zu speichern, aber ohne die eigentlichen Daten der Dateien zu speichern; und
Wobei während einer Datenwiederherstellung die datenlose virtuelle Festplatte gemounted und Dateisystemanwendungsprogramminterfaces implementiert sind, um die Metadaten für die Datenobjekte, die wiederhergestellt werden sollen, zu extrahieren;
Einen Vorgang (320) von Berechnen, auf dem Client-Computersystem, von Checksummendaten, die zu jedem der nutzerspezifizierten Backup-Datenobjekte korrespondieren;
Einen Vorgang (330) von Vergleichen, in einem Checksummenvergleichsmodul des Datenspeichers, die berechneten Checksummendaten der nutzerspezifizierten Backup-Datenobjekte mit Checksummendaten, die mit bereits auf dem Computersystem des Nutzers befindlichen Datenobjekten assoziiert sind, um zu bestimmen, welche Segmente der Backup-Datenobjekte auf dem Computersystem des Nutzers wiederhergestellt werden sollen;
Einen Vorgang (340) von Empfangen, auf dem Computersystem des Nutzers, von wenigstens einem der Datenbackups jene gesicherten Datenobjekte für welche die Checksumme nicht bereits auf den Computersystem des Nutzers existiert; und
Einen Vorgang (350) von Kombinieren der empfangenen Backup-Datenobjekte mit den existierenden Datenobjekten des Nutzers, sodass die Daten des Nutzers vollständig wiederhergestellt sind.

11. Das Computerprogrammprodukt nach Anspruch 10, wobei die Backup-Daten und Checksummen Versionen aufweisen (versioned).

12. Das Computerprogrammprodukt nach Anspruch 11, wobei Backup-Daten von einer bestimmten Backup-Datenversion wiederhergestellt werden.

13. Ein Computersystem umfassend das folgende:
Einen oder mehrere Prozessoren;
Einen Systemspeicher;
Ein oder mehrere computer-lesbare Speichermedien, die auf ihnen gespeicherte, von einem Computer ausführbare Instruktionen umfassen, die, wenn von dem einen oder den mehreren Prozessoren ausgeführt, das Computersystem dazu veranlassen, ein Verfahren zum Lokalisieren und Wiederherstellen von gesicherten Objekten unter Verwendung eines speziellen Schemas auszuführen, wobei das Verfahren das Folgende umfasst:
Einen Vorgang (210) von Definieren eines Schemas konfiguriert zum Bereitstellen von Datensuche und Wiederherstellung unter Backup-Datensätzen, wobei das Schema durchsuchbare Attribute für jedes Datenbankobjekt speichert und ein Dateisystem dazu veranlasst, Dateisystem-Metadaten für die Datenobjekte der Backup-Datensätze (131) zu speichern,
und wobei die Dateisystem-Metadaten auf einer datenlosen virtuellen Festplatte gespeichert sind, wobei die datenlose virtuelle Festplatte ausgebildet ist, Dateien, die mit ihren korrespondierenden Metadaten und Attributen erstellt wurden, zu speichern, aber ohne die eigentlichen Daten der Dateien zu speichern;
Einen Vorgang (220) von Empfangen, an einem Client-Computersystem, einer Abfrage zum Finden eines oder mehrerer Datenobjekte unter wenigstens einem der Backup-Datensätze (131), die in einem Datenspeicher (130) gespeichert sind;
Einen Vorgang (230) von Zugreifen auf das Schema um zu ermitteln, von den gespeicherten, durchsuchbaren Attributen, welche Wiederherstellungspunkte unter den Backup-Datensätzen die abgefragten Datenobjekte enthalten; und
Einen Vorgang (240) von Wiederherstellen der abgefragten Datenobjekte von dem ermittelten Wiederherstellungspunkt innerhalb der Backup-Datensätze, wobei während einer Datenwiederherstellung die datenlose virtuelle Festplatte gemounted und Dateisystemanwendungsprogramminterfaces implementiert sind, um die Metadaten für die Datenobjekte, die wiederhergestellt werden sollen, zu extrahieren;
Das Verfahren weiterhin umfassend:
Einen Vorgang (320) von Berechnen, auf dem Client-Computersystem, von Checksummendaten, die zu jedem der nutzerspezifizierten Backup-Datenobjekte korrespondieren;
Einen Vorgang (330) von Vergleichen, in einem Checksummenvergleichsmodul des Datenspeichers, die berechneten Checksummendaten der nutzerspezifizierten Backup-Datenobjekte mit Checksummendaten, die mit bereits auf dem Computersystem des Nutzers befindlichen Datenobjekten assoziiert sind, um zu bestimmen, welche Segmente der Backup-Datenobjekte auf dem Computersystem des Nutzers wiederhergestellt werden sollen;
Einen Vorgang (340) von Empfangen, auf dem Computersystem des Nutzers, von wenigstens einem der Datenbackups jene gesicherten Datenobjekte für welche die Checksumme nicht bereits auf den Computersystem des Nutzers existiert; und
Einen Vorgang (350) von Kombinieren der empfangenen Backup-Datenobjekte mit den existierenden Datenobjekten des Nutzers, sodass die Daten des Nutzers vollständig wiederhergestellt sind.

## Revendications

1. Une méthode implémentée sur un ordinateur pour localiser et restaurer des éléments sauvegardés utilisant un schéma de coutume à être performé dans un système d'ordinateur incluant au moins un processeur et une mémoire, dans un environnement de réseau d'ordinateur incluant un ensemble de systèmes informatiques, la méthode comprenant :
un acte (210) de définition d'un schéma configuré pour fournir une recherche de données et une extraction de données parmi des sets de données sauvegardées, où le schéma stocke des attributs consultables pour chaque élément de la base de données et mets en place un système de fichiers pour stocker des métadonnées d'un système fichiers pour les éléments de données des sets de données sauvegardées (131) ;
un acte (220) de réception, dans un système d'ordinateur client, d'une demande pour trouver un ou plusieurs éléments de données parmi au moins un des sets de données sauvegardées (131) stockés dans une mémoire de données (130) ;
un acte (230) d'accès au schéma pour déterminer, à partir des attributs consultables stockés, lesquels des points de récupération parmi les sets de données sauvegardées incluent les éléments de données demandées ; et
un acte (240) de restauration des éléments de données demandées à partir du point de récupération déterminé dans les sets de données sauvegardées ;
où les métadonnées du système fichiers sont stockées dans un disque dur virtuel sans données, le disque dur virtuel sans données étant configuré afin de stocker des fichiers de données créés avec leur métadonnées et attributs correspondant, mais sans stocker les données du fichier de données concerné ; et
où durant la récupération de données, le disque dur virtuel sans données est monté et des interfaces de programmation d'application de système de fichiers sont implémentées pour extraire les métadonnées pour les éléments de données qui doivent être récupérés ;
la méthode comprenant en outre :
un acte (320) de calcul, dans le système d'ordinateur client, de données de somme de contrôle correspondant à chacun des éléments de données sauvegardées spécifiées par l'utilisateur ;
un acte (330) de comparaison, dans un module de comparaison de sommes de contrôle de la mémoire de données, des données de somme de contrôle calculées des fichiers de données de sauvegardes spécifiés par l'utilisateur avec des données de somme de contrôle associées avec des éléments de données qui sont déjà sur le système d'ordinateur de l'utilisateur pour déterminer quels segments des éléments des données sauvegardées doivent être restaurés dans le système de l'ordinateur de l'utilisateur ;
un acte (340) de réception, au niveau du système de l'ordinateur de l'utilisateur, de ces éléments de données sauvegardées venant d'au moins une des données sauvegardées pour lesquels une somme de contrôle n'existait pas déjà sur le système de l'ordinateur de l'utilisateur ; et
un acte (350) de combinaison des éléments de données sauvegardées reçus avec les éléments de données de l'utilisateur existants pour que les données de l'utilisateur soient complément récupérées.

2. La méthode de la revendication 1, où les attributs consultables comprennent au moins une indication de l'heure quand la portion de données était stocké en premier dans le set de sauvegarde et l'heure quand la portion de données était accédée en dernier.

3. La méthode de la revendication 2, où une interface utilisateur utilisant le schéma affiche une étendue des sets de sauvegardes dont la portion de données fait partie.

4. La méthode de la revendication 2, où l'interface utilisateur montre, pour chaque élément de données, le premier point de récupération et le dernier point de récupération.

5. La méthode de la revendication 1, où le système de fichiers métadonnées inclue les informations parent et les informations sur le nom des fichiers.

6. La méthode de la revendication 5, où l'information des parents et l'information sur le nom du fichier sont stocké dans des tables séparées.

7. La méthode de la revendication 5, où l'information des parents inclue un trajet qui est séparé en deux parties, la première de ces deux parties étant limitées en longueur a une longueur de données prédéfini.

8. La méthode de la revendication 5, où une ou plusieurs portions d'informations étendue sur un élément enfant sont stocké dans une table additionnelle, la table additionnelle utilisant un schéma qui est spécifique au type des attributs stocké et interrogé, l'information étendue permettant les fonctions de recherche et recouvertes qui implémente l'information étendue.

9. La méthode de la revendication 5, où l'information de l'élément enfant est étendue pour ajouter une ou plusieurs propriétés d'éléments spécifique à l'enfant basées sur le contexte de la source de l'élément de données enfants.

10. Un produit de programme d'ordinateur pour l'implémentation d'une méthode pour transférer efficacement de données récupérées, le produit de programme d'ordinateur comprenant un ou plusieurs supports de stockage pouvant être lus par ordinateur ayant stocké des instructions exécutables par ordinateur qui, quand exécutées par un ou plusieurs processeurs du système de calcul, cause le système de calcul à performer la méthode, la méthode comprenant :
un acte (310) de réception, dans un
système d'ordinateur du client, d'un utilisateur une indication d'un ou plusieurs éléments de données sauvegardées qui sont à récupérer à partir d'un point de récupération spécifique dans un set de données sauvegardées stocké dans une mémoire de données (130) ;
un acte (210) de définition d'un schéma configurée pour fournir une recherche de données et une extraction de données parmi des données sauvegardées, des sets (131), où le schéma stocke des attributs consultable pour chaque élément de base de données et met en place un système de fichiers pour stocker des métadonnées d'un système fichiers pour les éléments de données des sets de données sauvegardées (131) ;
un acte (220) de réceptions dansun système d'ordinateur client, d'une demande pour trouver un ou plusieurs éléments de données parmi au moins un des sets de données sauvegardées stockés dans une mémoire de données ;
un acte (230) d'accès au schéma pour déterminer, à partir des attributs consultable stockés, lesquels des points de récupérations parmi les sets de données sauvegardées incluent les éléments de données demandées ; et
un acte (240)de restaurer les éléments de données demandées à partir du point de récupération déterminée dans les sets de données sauvegardées ;
où les métadonnées du système fichiers sont stockées dans un disque dur virtuel sans données, le disque dur virtuel sans données étant configuré pour stocker des fichiers de données créés avec leur métadonnées et attributs correspondant, mais sans stocker les données du fichier de données concerné ; et
où durant la récupération de données, le disque dur virtuel sans données est monté et des interfaces de programmation d'application de système sont implémentées pour extraire les métadonnées pour les éléments de données qui doivent être récupérés ;
un acte (320) de calcul, dans le système d'ordinateur de l'utilisateur, de données de somme de contrôle correspondant à chacun des éléments de données sauvegardées spécifiées par l'utilisateur ;
un acte (330) de comparaison, dans un module de comparaison de somme de contrôle du stockage de données, des données de somme de contrôle calculées des fichiers de données sauvegardées spécifiés par l'utilisateur avec des donnés de somme de contrôle associées avec des éléments de données qui sont déjà sur le système d'ordinateur de l'utilisateur pour déterminer quels segments des éléments de données sauvegardées doivent être restaurés dans le système d'ordinateur de l'utilisateur ;
un acte (340) de réception, au niveau du système d'ordinateur de l'utilisateur, de ces éléments de données sauvegardées venant d'au moins une des données sauvegardées pour lesquels une somme de contrôle n'existait pas déjà sur le système d'ordinateur de l'utilisateur ; et
un acte (350)
de combinaison des éléments de données sauvegardées reçus avec les éléments de données existants de l'utilisateur pour que les données de l'utilisateur soient complètement récupérées.

11. Le produit du programme d'ordinateur de la revendication 10, où les données de sauvegarde et les sommes de contrôle ont une version.

12. Le produit du programme d'ordinateur de la revendication 11, où les données de sauvegarde sont restaurées à partir d'une version de données sauvegardées spécifiée.

13. Un système d'ordinateur comprenant:
un ou plusieurs processeurs ;
mémoire système ;
un ou plusieurs supports de stockage lisible par ordinateur ayant stocké dessus des instructions exécutables par ordinateur qui, quand exécutées par un ou plusieurs des processeurs, cause le système de calcul à réaliser une méthode pour localiser et restaurer des éléments sauvegardés utilisant un schéma de coutume, la méthode comprenant ci-après :
un acte (210)
de définition d'un schéma configurée pour fournir une recherche et une extraction de données parmi des sets de données sauvegardées (131),
où le schéma stocke des attributs consultables pour chaque élément de la base de données et mets en place un système de fichiers pour stocker des métadonnées d'un système fichiers pour les éléments de données des sets de données sauvegardées (131),
et où les données du système de fichiers sont stockées dans un disque dur virtuel sans données, le disque dur virtuel sans données étant configuré afin de stocker des fichiers de données créés avec leur métadonnées et attributs correspondant, mais sans stocker les données du fichier de données concerné ;
un acte (220) de réception, dans un système d'ordinateur d'utilisateur, d'une demande pour trouver un ou plusieurs éléments parmi au moins un des sets de données sauvegardées stockés dans une mémoire de données (130) ;
un acte (230) d'accès au schéma pour déterminer, à partir des attributs consultables stockés, lesquels des points de récupération parmi les sets de données sauvegardées incluent les éléments de données demandées ; et
un acte (240) de restauration des éléments de données demandées 'partir du point de récupération déterminé dans les sets de données sauvegardées, où durant la récupération de données, le disque dur virtuel sans données est monté et des interfaces de programmation d'application de système de fichiers sont implémentées pour extraire les métadonnées pour les éléments de données qui doivent être récupérés ;
la méthode comprenant en outre :
un acte (320) de calcul, dans le système d'ordinateur du client, de données de somme de contrôle correspondant à chacun des éléments de données sauvegardées spécifiées par l'utilisateur ;
un acte (330) de comparaison, dans un module de comparaison de somme de contrôle de la mémoire de données, des données de somme de contrôle calculées des fichiers de données de sauvegarde spécificiés par l'utilisateur avec des données de somme de contrôle associées avec des éléments de données déjà sur le système d'ordinateur de l'utilisateur pour déterminer quels segments des éléments de données sauvegardées doivent être restaurés dans le système d'ordinateur de l'utilisateur ;
un acte (340) de réception, au niveau du système d'ordinateur de l'utilisateur, de ces éléments de données sauvegardées venant d'au moins une des données sauvegardées pour lesquelles une somme de contrôle n'existait pas déjà sur le système d'ordinateur de l'utilisateur ; et
un acte (350) de combinaison des éléments de données sauvegardées reçus avec les éléments de données de l'utilisateur existants afin que les données de l'utilisateur soient complétement récupérées.
